Europäisches Patentamt

European Patent Office

Office européen des brevets

(11) Publication number: **0 408 351 A1**

# EUROPEAN PATENT APPLICATION

(21) Application number: 90307607.3

(51) Int. Cl.⁵: **B60T 8/00**

(22) Date of filing: **11.07.90**

(30) Priority: **14.07.89 GB 8916238**

(43) Date of publication of application:
**16.01.91 Bulletin 91/03**

(84) Designated Contracting States:
**AT BE CH DE DK ES FR GB GR IT LI LU NL SE**

(71) Applicant: **GRAU LIMITED**
**Arrowdale Road**
**Redditch Worcestershire B98 7EZ(GB)**

(72) Inventor: **Ross, Colin Ford**
**7 Pintail Grove**
**Kidderminster(GB)**

(74) Representative: **Leach, John Nigel et al**
**FORRESTER & BOEHMERT**
**Widenmayerstrasse 4/I4/I**
**D-8000 München 22(DE)**

(54) Anti-lock brake system.

(57) An anti-lock braking system for a multi-axle vehicle of the kind specified comprising brake actuator means (3, 4, 4a) associated with wheels (1, 2, 2a) on all of said axles and which are responsive to an applied brake pressure to actuate wheel brakes, a fluid pressure source (5a, 5b), a supply means (5) to supply brake pressure from said source to said brake actuator (3, 4, 4a) means, skid sensing (13, 13a) means operable to sense an incipient skid condition of a wheel (1, 2a) on at least one of said pair of axles, pressure modulating means (7, 7a) operable in response to detection of an incipient skid condition to modify said brake pressure in those of said brake actuator means (3, 4a) associated with said at least one of said pair of axles to correct said condition, said supply means enabling further of said actuator means (4) associated with said additional axle to be operated in a first mode, independently of said modulating means (7, 7a), in response to the occurrence of less than a predetermined load on at least one of said axles, or in a second mode, dependent on said modulating means (7, 7a), in response to the occurrence of at least said predetermined load.

FIG 1

## ANTI-LOCK BRAKE SYSTEM

This invention relates to an anti-lock brake system, for a multi-axle vehicle, hereinafter referred to as being "of the kind specified", having at least one axle in addition to a pair of axles one of which is driven and the other of which is steerable.

One example of a vehicle of the kind specified has a so called 6 x 2 axle configuration in which there is one additional axle which is either a further steerable axle or is a non-steerable tag axle.

An object of the invention is to provide a new and improved anti-lock braking system for a multi-axle vehicle of the kind specified.

According to the present invention, we provide an anti-lock braking system for a multi-axle vehicle of the kind specified comprising brake actuator means associated with wheels on all of said axles and which are responsive to applied fluid pressure, hereinafter referred to as brake pressure, to actuate wheel brakes, a fluid pressure source, a supply means to supply brake pressure from said source to said brake actuator means, skid sensing means operable to sense an incipient skid condition of a wheel on at least one of said pair of axles, pressure modulating means operable in response to detection of an incipient skid condition to modify said brake pressure in those of said brake actuator means associated with said at least one of said pair of axles to correct said condition, said supply means enabling further of said brake actuator means associated with said additional axle to be operated in a first mode, independently of said modulating means, in response to the occurrence of less than a predetermined load on at least one of said axles, or in a second mode, dependent on said modulating means, in response to the occurrence of at least said predetermined load.

When such a vehicle is unladen or only lightly laden, the additional axle contributes very little to the retarding force or stability during braking, and anti-lock control under these conditions can therefore be confined to the steerable and driven axles. When the vehicle is laden, however, benefit can be obtained by providing indirect anti-lock control to the additional axle dependent upon that applied to the steerable and/or driven axle.

In a preferred arrangement, the occurrence of at least said predetermined load gives rise to actuation of an additional pressure signal which is applied to valve means which is responsive to said signal to enable said further actuator means to be operable in said second mode.

Said valve means is conveniently a pilot valve movable by said signal between a first position in which brake pressure is supplied to said further actuator means independently of said modulating means and a second position in which brake pressure is supplied to said further actuator means dependent on said modulating means.

Said signal may be a fluid pressure signal.

Preferably, said fluid pressure signal is generated in response to movement of suspension means associated with at least one of said axles.

Alternatively, said signal may be an electric signal.

Said electric signal may be generated in response to change in pressure in a fluid suspension means associated with at least one of said axles.

Preferably, said at least one of said axles is said driven axle.

Said supply means may comprise a relay valve to supply brake pressure to said brake actuator means in response to a brake command signal supplied to the relay valve under the control of a driver operated control means.

The invention will now be described, by way of example, with reference to the accompanying drawings, in which:-

FIGURE 1 is a diagrammatic representation of an anti-lock brake system of the invention, and

FIGURES 2 - 4 are similar diagrammatic representations respectively of alternative embodiments of the invention.

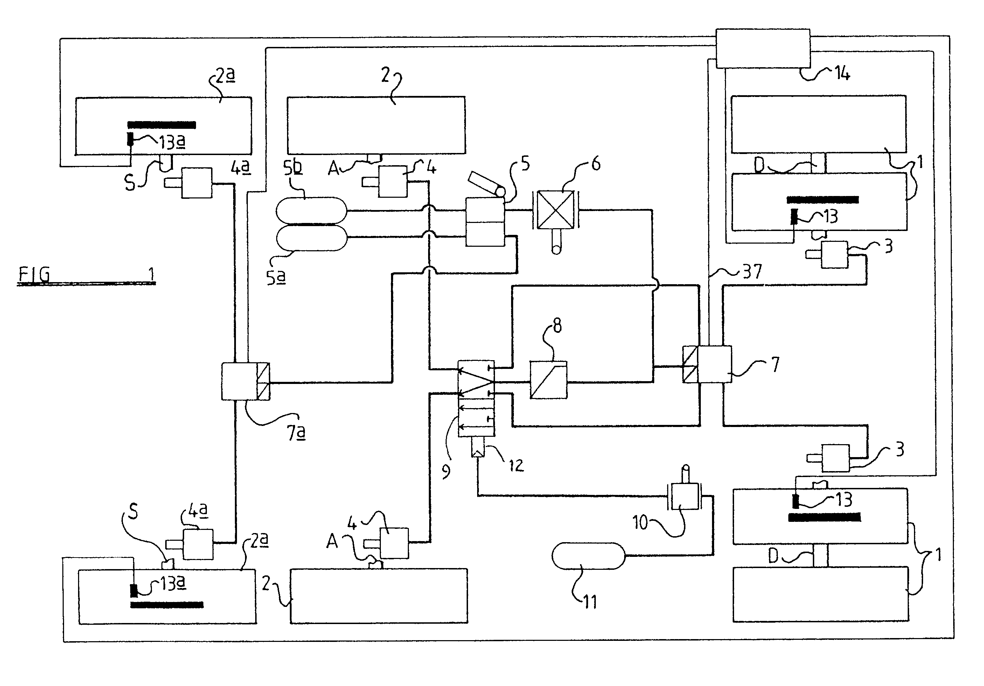

Figure 1 illustrates one form of the anti-lock brake system of the invention installed in a vehicle, of which a pair of driven wheel assemblies are illustrated at 1 and are carried on a driven axle D and a further pair of wheels 2 are carried by an additional axle A which may be a steerable axle or alternatively a tag axle as in the present example. The vehicle also has further wheels 2 a carried by a steerable axle S which is at the side of the additional axle A remote from the driven axle D. Alternatively, the steerable and driven wheels may be arranged in adjacent succession with the additional axle at the side of the driven wheels remote from the steerable wheels.

The system illustrated is air-operated and pairs of brake actuators 3, 4, 4 a , comprising air operated cylinders, are associated respectively with wheels 1, 2, 2 a on the driven, additional and steerable axles. A driver operated brake control means, such as a tandem valve 5, is provided to feed air under pressure from an accumulator 5 a , 5 b or other air pressure source such as a pump, to the brake actuators 3, 4, 4 a The pressure of the air, herein referred to as "the brake pressure", is controlled by the brake control means 5 under driver control.

The brake actuators 4 a are supplied with pressure from accumulator 5 a by one part of the tandem valve 5 via an anti-lock modulating valve 7 a . The brake actuators 3 and further actuators 4 are supplied with brake pressure from accumulator 5 b by the other part of the valve 5 so that two completely separate braking systems are provided.

A load sensing valve 6 is provided which is arranged to sense the load on the driven axle D and regulate the brake pressure supplied from the accumulator 5 b to the brake actuators 3 and 4 in accordance with that load in conventional manner. The output from the valve 6 is connected to an anti-lock modulating valve 7 and also, via a pressure limiting valve 8 and a pilot valve 9, to the further brake actuators 4 of the additional axle wheels 2. If desired, the valve 8 may be omitted and/or other pressure control means may be provided as desired.

A suspension levelling valve is illustrated at 10 which senses the pressure in air suspension units of the vehicle and regulates the air supply to those units in a manner such as to provide the desired suspension characteristics for the vehicle. The valve 10 is connected between an air pressure reservoir 11 and a pilot pressure inlet 12 of the valve 9.

The driven wheels 1 and the steerable wheels 2 a are provided with wheel speed sensors 13, 13 a respectively of any suitable conventional type. The sensors 13, 13 a produce an electrical signal which is a function of the speed of rotation of the respective wheel which is fed to an electronic controller 14. Upon the occurrence of an incipient wheel skid condition, the controller 14 provides outputs which are fed to the modulator valves 7, 7 a so that the brake pressure is modulated in conventional manner to avoid skidding. In the present example the sensors 13 provide an electrical signal to the controllor 14, to provide an output for the modulator valve 7 whilst the sensors 13 a provide an electrical signal to the controller 14 to provide an output for the modulator valve 7 a .

Operation by the driver of the control means 5 effects anti-skid braking of the steerable wheels 2 a under all load conditions by feeding brake pressure to the modulator valve 7 a where the brake pressure is modulated in conventional manner by the controller 14.

When the vehicle is either unladen or relatively lightly laden, the pressure at the pressure inlet 12 of the valve 9 places the pilot valve 9 in its illustrated condition so that the further brake actuators 4 are operated in a first mode, which is independent of the modulator valve 7.

Accordingly, a brake pressure from the driver-operated valve 5 proportional to driver demand is passed to the load sensing valve 6, which reduces it, if necessary, according to the load on the drive axle. The modified braking pressure from the valve 6 is fed to the modulator valve 7 which, in the absence of any skid signal from the controller 14 transmits air pressure to the brake actuators 3 for normal braking of the wheels 1. In the event that an incipient skid condition is sensed, the controller 14 is caused to actuate the modulator valve 7 to initiate an anti-skid mode in which the actuators 3 are rapidly cycled between greater and lesser braking effect, in conventional manner, until the incipient skid condition is corrected.

Pressure from the valve 6 is also fed, independent of the modulator valve 7, to the pressure limiting valve 8 which reduces the pressure to, for example, 10% of its initial value for feeding via the pilot valve 9 to the actuators 4 on the lightly laden additional axle D carrying the wheels 2. The aforesaid pressure reduction minimises the tendency of the wheels 2 to lock due to over-braking under normal conditions. It will be seen that the anti-lock braking mode experienced by the wheels 1 is not applied to the wheels 2 when the additional axle is lightly laden and although this may result in locking of the wheels 2 under certain road conditions, the stability of the vehicle will remain substantially unaffected by this.

When the load on the vehicle is increased, the load supported by the additional axle is in turn increased in order to prevent overloading of the driven axle D. Under these conditions, the levelling valve 10 is actuated to connect the accumulator 11 to the inlet 12 of the valve 9 and thereby supply a pilot operating pressure to this valve in order to move it from its illustrated position to an alternative position so that the further brake actuators 4 are operated in a second mode, which is dependent on the modulator valve 7.

In said alternative position of the valve 9 the supply from the pressure limiting valve 8 to the actuators 4 is interrupted and the actuators 4 are connected instead to the modulator valve 7 so as to experience the brake modulation pressure supplied to the actuators 3 of the driven axle. In this condition, actuation of the modulator valve to initiate an anti-skid mode will operate all of the actuators 3 and 4 in this mode. Since the weight difference between the driven and additional axles is now much less, considerable benefit is derived in terms of control and stability of the vehicle under skid conditions by anti-skid actuation of the additional axle. When the driven axle is supported at least partly by mechanical springs, it is convenient to actuate the levelling valve 10 from the deflection of these mechanical springs in order to provide the pilot signal to the spool valve 9. This may, however, be accomplished by alternative means from air suspension units.

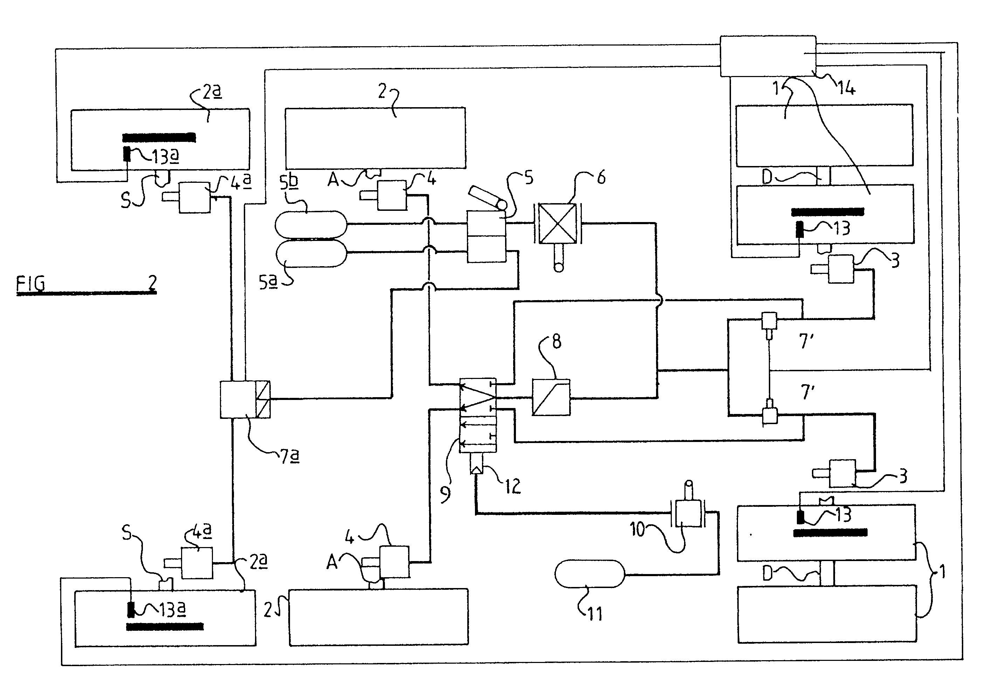

An alternative embodiment of the system is illustrated in Figure 2 and is substantially identical to that of Figure 1, except that the actuator 3 of each wheel or set of wheels 1 on the driven axle is provided with a respective individual pressure modulator 7′, in place of the single unit 7 previously described, and each actuator 3 is, therefore, individually modulated by the associated one of the modulators 7′. Actuation of this system is otherwise identical with that of Figure 1 and the same references have been used in Figure 2 as are used in Figure 1 for corresponding parts.

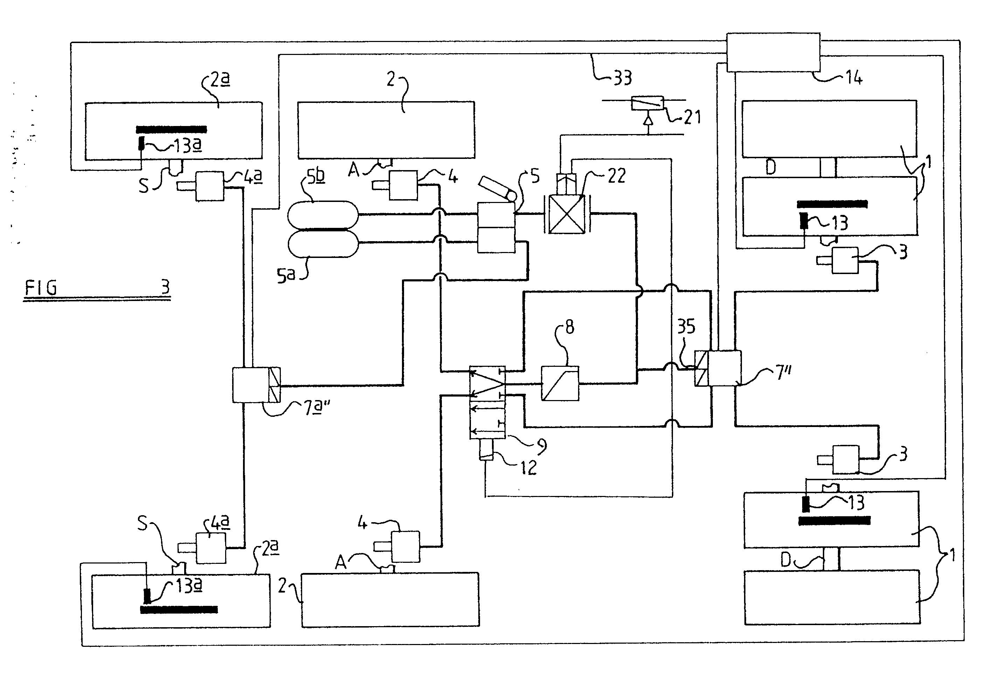

Figure 3 illustrates another embodiment of the invention which is substantially identical to that of Figure 1 except that the levelling valve 10 of the Figure 1 embodiment is replaced by an electrical pressure switch 21 arranged to sense the air pressure in an air suspension means by which the drive axle D is conveniently suspended. The load sensing valve 6 is replaced by a load sensing valve 22 which is connected electrically to the pressure switch 21 and controls the pressure applied to the brakes in a load-sensitive manner, as before. The pilot valve 9 is also electrically operated by a solenoid 23 connected to the valve 22 and thence to the pressure switch 21.

Under conditions of light or no load in the vehicle, the driven wheels 1 are actuated by way of the modulator valve 7 which initiates an anti-skid mode on these wheels under the appropriate conditions, without modifying the braking applied to the wheels 2, which are still braked directly via the valves 22 and 9. At a predetermined loading of the vehicle, the pressure switch 21 produces an electrical output which energises the solenoid 23 of the valve 9, causing the latter to move to its alternative state so as to cause the actuators 4 to be supplied via the modulator valve 7 and thereby experience anti-skid braking when this is initiated by the controller 14.

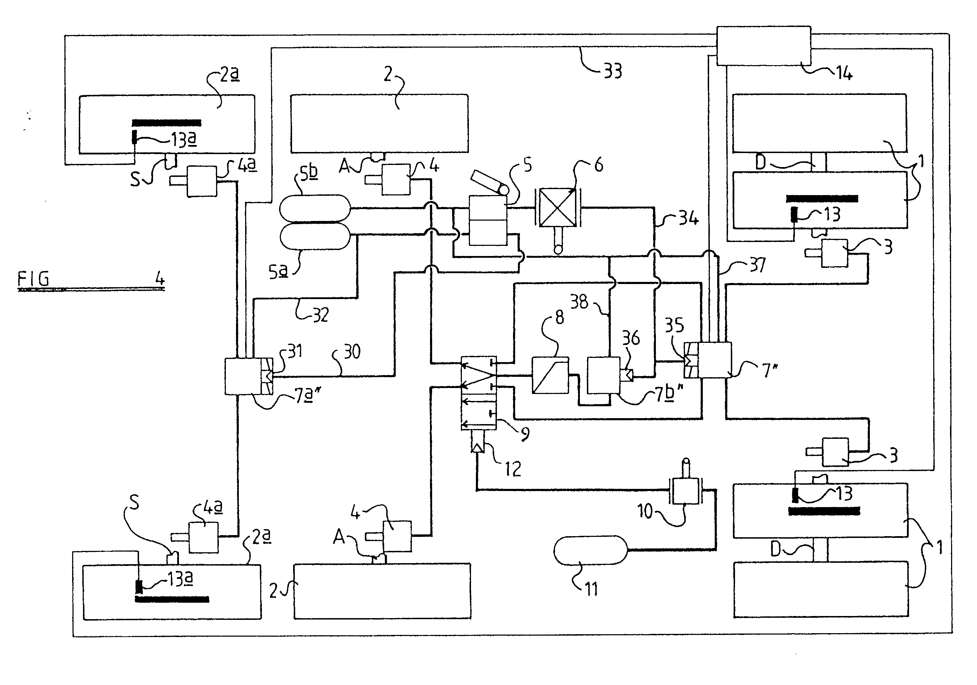

Figure 4 illustrates a still further embodiment of the invention which is similar to the embodiment of Figure 1 except that the modulator valves 7, 7a of the Figure 1 embodiment are replaced by combined relay and modulator valves shown at 7″, 7 a ″ respectively in Figure 4. In addition, a relay valve 7 b ″ provided in the supply to the pilot valve 9 through the pressure limiting valve 8.

In this embodiment operation by the driver of the control means 5 effects anti-skid braking of the steerable wheels 2 a under all load conditions by feeding a brake command signal from the accumulator 5 a via the line 30 to the pilot port 31 of the combined relay and modulator valve 7 a ″. The pressure of the command signal thus applied to the port 31 controls the brake pressure fed to the actuators 4 a from the accumulator 5 a through the line 32. In addition, the brake pressure is modulated by the modulator part of the combined modulator and relay valve 7 a ″ in accordance with

a control signal fed from the controller 14 via the line 33.

Operation of the valve 5 also feeds air under pressure from the accumulator 5 b along line 34 to provide a brake command signal to a pilot port 35 of the combined relay valve and modulator 7″ and a pilot port 36 of the relay valve 7 b ″. Air under pressure is also fed from the accumulator 5 b to the valves 7″ and 7 b ″ via line 37 and branch 38. Thus, the brake pressure supplied by the combined relay valve and modulator 7″ to the wheel actuators 3 and 4 is controlled in accordance with the brake command signal supplied on the line 34, whilst the brake pressure supplied by the relay valve 7 b to the actuators 4 is similarly controlled by the brake command signal supplied to the valve 7 b ″ on the line 34.

In other respects the system shown in Figure 4 is as described in connection with Figure 1 and thus whether or not brake pressure is supplied by the relay valve 7 b ″ or by the combined relay valve and modulator 7″ depends upon the position of the valve 9 in accordance with the load determined by the levelling valve 10.

The relay function provided by the valves 7″, 7 b ″ described above is provided in order to improve the response time of the system and in certain circumstances one or other of the relay functions provided by the valve 7″ and 7 b ″ may be omitted so that in any particular system only one of the valves 7″ or valve 7 b ″ may be provided.

Moreover, instead of the single combined relay and modulator valve 7″ described with reference to Figure 4, two separate combined relay and modulator valves may be provided in a manner analogous to that described with reference to Figure 2 so that the modulators 7′ shown therein would be replaced by a pair of combined relay and modulator valves similar to the valve 7′ described with reference to Figure 4. In addition, the electrical operation of the load sensing valve 22 and pilot valve 9 described with reference to Figure 3 may be applied in the embodiment described with reference to Figure 2 or the embodiment described with reference to Figure 4.

In all embodiments, instead of a single 5/2 pilot valve 9, two separate 3/2 pilot valves may be provided connected in parallel, one valve being provided in each line from the modulator 7, 7′ or 7″ to the respective wheel actuator 4.

In the above described embodiments the wheels on the additional axle A are controlled by the modulators 7, 7′, 7″ and the controllor 14 in accordance with incipient skid signals provided by the sensors 13 associated with the driven wheels 1 and the pilot valve 9 causes the actuators 4 to operate in either their first or their second mode in accordance with the load carried by the driven axle D, However, if desired, the actuators 4 associated with the wheels 2 may be operated under the control of the modulator 7 a , 7 a " by the controller 14 under the influence of signals provided by wheel speed sensors associated with the steerable wheels 2 a . In addition, or alternatively, the pilot valve 9 may be actuated to operate the actuators 4 in either their first mode or their second mode in accordance with the load carried on the steerable wheels 2 a or the additional wheels 2.

The features disclosed in the foregoing description, or the following claims, or the accompanying drawings, expressed in their specific forms or in terms of a means for performing the disclosed function, or a method or process for attaining the disclosed result, or a class or group of substances or compositions, as appropriate, may, separately or in any combination of such features, be utilised for realising the invention in diverse forms thereof.

**Claims**

1. An anti-lock braking system for a multi-axle vehicle of the kind specified comprising brake actuator means associated with wheels on all of said axles and which are responsive to an applied brake pressure to actuate wheel brakes, a fluid pressure source, a supply means to supply brake pressure from said source to said brake actuator means, skid sensing means operable to sense an incipient skid condition of a wheel on at least one of said pair of axles, pressure modulating means operable in response to detection of an incipient skid condition to modify said brake pressure in those of said brake actuator means associated with said at least one of said pair of axles to correct said condition, said supply means enabling further of said actuator means associated with said additional axle to be operated in a first mode, independently of said modulating means, in response to the occurrence of less than a predetermined load on at least one of said axles, or in a second mode, dependent on said modulating means, in response to the occurrence of at least said predetermined load.

2. A system according to Claim 1 wherein the occurrence of at least said predetermined load gives rise to a signal which is applied to valve means which is responsive to said signal to enable said further actuator means to be operable in said second mode.

3. A system according to Claim 2 wherein said valve means is a pilot valve movable by said signal between a first position in which brake pressure is supplied to said further actuator means independently of said modulating means and a second position in which brake pressure is supplied to said further actuator means dependent on said modulating means.

4. A system according to Claim 2 or Claim 3 wherein said signal is a fluid pressure signal.

5. A system according to Claim 4 wherein said fluid pressure signal is generated in response to movement of suspension means associated with at least one of said axles.

6. A system according to Claim 2 or Claim 3 wherein said signal is an electric signal.

7. A system according to Claim 6 wherein said signal is generated in response to change in pressure in a fluid suspension means associated with at least one of said axles.

8. A system according to any one of the preceding claims wherein said at least one of said axles is said driven axle.

9. A system according to any one of the preceding claims wherein said supply means comprises a relay valve to supply brake pressure to said brake actuator means in response to a brake command signal supplied to the relay valve under the control of a driver operated control means.

FIG 1

FIG 2

FIG 3

EP 0 408 351 A1

FIG 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-3138834 (WABCO)<br>* page 4, line 1 - page 6, line 23; figures 1, 2 * | 1, 3 | B60T8/00 |
| A | DE-A-2757911 (BOSCH)<br>* page 8, paragraph 5 - page 9, line 9; figure 6 * | 2, 4-8 | |
| A | DE-A-3501381 (BOSCH)<br>* page 5, paragraph 4 - page 6, paragraph 2; figures 1, 4 * | 1 | |
| A | EP-A-0002073 (BOSCH)<br>* abstract; figures 1-3 * | 1 | |

TECHNICAL FIELDS
SEARCHED (Int. Cl.5 )

B60T

The present search report has been drawn up for all claims

| Place of search | Date of completion of the search | Examiner |
|---|---|---|
| BERLIN | 22 OCTOBER 1990 | BLURTON M.D. |

EPO FORM 1503 03.82 (P0401)